# NEUE EUROPÄISCHE PATENTSCHRIFT

(11) **EP 0 249 781 B2**
(45) Veröffentlichungstag und Bekanntmachung des Hinweises auf die Entscheidung über den Einspruch: **22.07.1998**
(45) Hinweis auf die Patenterteilung: 20.01.1993
(21) Anmeldenummer: 87107797.0
(22) Anmeldetag: 29.05.1987
(51) Int. Cl.: G11B 7/09, G11B 7/013, G11B 20/10, G11B 19/04, G11B 20/22, G11B 27/10

(54) **Compact Disc (CD)- Spieler**
Compact disc (CD) player
Lecteur de disques compacts (CD)

(30) Priorität: 07.06.1986 DE 3619258
(43) Veröffentlichungstag der Anmeldung: 23.12.1987
(73) Patentinhaber: Blaupunkt-Werke GmbH, 31132 Hildesheim (DE)
(72) Erfinder: Vogelsang, Ulrich, Dr.-Ing., D-3200 Hildesheim (DE)

(56) Entgegenhaltungen:
- EP-A- 0 136 051
- EP-A- 0 139 332
- EP-A- 0 143 474
- EP-A- 0 217 460
- DE-A- 2 933 138
- DE-A- 3 423 887
- GB-A- 2 154 030
- PATENT ABSTRACTS OF JAPAN vol. 9, no. 68 (P-344)(1791) 28 März 1985, & JP-A-59 201274
- JP-A-61-105781 ,&PATENT ABSTRACTS OF JAPAN vol. 10, no. 288 *P-502* 2344 *30 Sept.,1986,
- PATENT ABSTRACTS OF JAPAN vol. 9, no. 320 (P-413)(2043) 14 Dezember 1985, & JP-A-60 145568
- PATENT ABSTRACTS OF JAPAN vol. 9, no. 167 (P-372)(1890) 12 Juli 1985, & JP-A-60 043270
- AUDIO. vol. 68, no. 7, Juli 1984, PHILADELPHIA US Seiten 26 - 29; L.FELDMAN: "SONYCARCDPLAYER:On The Road Ahead"
- JOURNAL OF THE AUDIO ENGINEERING SOCIETY. vol. 32, no. 3, März 1984, NEW YORK US Seiten 114 - 122; INGEBRETSEN et al.: "Random-Access Editing of Digital Audio"
- Alles über Video, Technik und Anwendung von Videorecordern und Bildplattenspielern. H. Bahr, 1981, Seiten 260, 261, 268-275

## Beschreibung

Die Erfindung betrifft einen Compact Disc-Spieler, kurz CD-Spieler genannt, zum Abspielen von CD-Platten, der im Oberbegriff des Anspruchs 1 definierten Art.

Auf den marktüblichen CD-Platten mit einem Durchmesser von 12 cm sind Audioinformationen und zusätzliche Informationen, z.B. über die Anzahl der auf der Platte befindlichen Musiktitel, über den Komponisten, über den Interpreten und die Spieldauer, ebenso Synchronisations- und Fehlerkorrekturdaten für die Funktion des CD-Spielers digital in PCM-Technik gespeichert. Die 1/0-Impulse des PCM-Signals sind dabei als mikroskopisch kleine Vertiefungen (Pits) in einer von innen nach außen verlaufenden Spirale auf der CD-Platte eingeprägt, so daß eine Vielzahl von diesen Informationen enthaltenden Spuren in Radialrichtung der CD-Platte mit einem Spurabstand von ca. 1,6 µm nebeneinander liegen. Die digitalen Daten sind dabei durch die Pit-Länge und den Abstand zwischen den Pits definiert, die durch die bei der CD-Platte verwendete Eight-to-Fourteen-Modulation (EFM) festgelegt werden.

Die Spirale mit ihren ungefähr 13 000 Informationsspuren ist in einer als verspiegelte Metallschicht ausgebildeten Informationsebene der CD-Platte eingeprägt, die auf der Prägeseite mit einer Schutzlackschicht überzogen und mit dem Plattenlabel versehen ist. Auf der anderen Seite ist die Informationsebene von einer transparenten Trägerschicht mit exakt vorgegebenem Brechungsindex abgedeckt, durch welche hindurch die Informationen von dem CD-Spielermittels eines Laserstrahles abgetastet werden. Die Abtastung erfolgt dabei mit einer konstanten Bitrate, wozu die Drehzahl des Plattenantriebsmotors von 500 U/min im Platteninnern bis auf 200 U/min zum Plattenrand hin verändert wird. Da die abgetasteten Informationen als digitale Daten zunächst in einen 16 kBit-RAM der Signalverarbeitungsvorrichtung eingeschrieben und mittels einer quarzgenauen Taktfrequenz ausgelesen werden, haben Drehzahländerungen des Plattenantriebsmotors keinen Einfluß auf das Gleichlaufverhalten.

Zur Abtastung der CD-Platte wird im CD-Spieler eine Laserdiode mit einer Lichtausgangsleistung von ca 1 mW verwendet, deren Wellenlänge im Infrarotbereich liegt. Der Laserstrahl wird mit einer in zwei Richtungen (axial und radial zur CD-Platte) beweglichen Abtastoptik auf die Spuren in der Informationsebene der CD-Platte fokussiert, wobei ein Fokus-Regelkreis für die exakte Fokussierung und ein Tracking- oder Spurregelkreis für die spurgetreue Nachführung der Abtastoptik sorgt. Zur Grobnachführung der Abtastoptik ist diese auf einem Schlitten montiert, der in Radialrichtung der rotierenden Platte motorisch verfahrbar ist. Ein Schlitten-Regelkreis sorgt für die entsprechende Verschiebung des Schlittens, so daß die Abtastoptik den gesamten Plattenradius überfahren kann. In jeder Schlittenstellung kann mittels des Spurregelkreises die Abtastoptik in Radialrichtung über einen Feintrackingbereich von ca. 40 Spuren nachgeführt werden.

Die mittels der Abtastoptik erhaltenen Abtastwerte werden verstärkt als analoges Ausgangssignal der Signalverarbeitungsvorrichtung zugeführt und zunächst in ein impulsgeformtes, mit der Taktfrequenz der Signalverarbeitungsvorrichtung synchronisiertes digitales Signal umgewandelt. Dann wird die EFM-Demodulation und eine Subcode-Demodulation durchgeführt. Die Subcode-Demodulation ergibt ein Subcode-Q-Signal, das neben sog. Synchronisier-Bits, Steuer-Bits, Kontroll-Bits 72 Data-Q-Bits mit 9 Q-Daten TNO, X, MIN, SEC, FRAME, ZERO, AMIN, ASEC, AFRAME aufweist. TNO gibt die Nummer des Musikstückes, die X-Kennung die Teilungsrate an. FRAME. SEC, MIN bzw. AFRAME, ASEC,AMIN enthalten Spielzeitund Titelkennung im BCD-Code. Mit zunehmender Abspieldauer der CD-Platte erhöht sich die Zeitanzeige. In den Pausen zwischen zwei Musiktiteln wird die Zeitkennung wieder auf Null zurückgesetzt. Die aus der EFM gewonnenen Daten werden in das RAM eingeschrieben. Die eingeschriebenen Daten werden entschlüsselt (CIRC-Decodierung) und die entschlüsselten Daten werden ausgelesen und über eine Fehlerkorrekturschaltung und ein Digitalfilter dem Digital-Analog-Wandler (D/A-Wandler) zugeführt. Das analoge Audiosignal wird über eine Stummschaltung getrennt den Stereokanälen des NF-Teils eines Rundfunkempfängers zugeführt.

Beim Betrieb von CD-Spielern in Kraftfahrzeugen treten infolge von unvermeidbaren mechanischen Erschütterungen Spursprünge auf, d.h. die Abtastoptik verliert bei Stoßeinwirkung die momentane Spur und wird nach Abklingen des Stoßes auf eine willkürliche andere Spur positioniert. Um solche Spursprünge zu unterdrücken bzw. abzumildern könnte das Laufwerk, also der Plattenteller mit Antriebsmotor und die Abtastoptik mit Schlitten, schwingungsgedämpft aufgehängt werden. Allerdings ist hierdurch ein vergrößertes Bauvolumen des CD-Spielers bedingt, das in Kraftfahrzeugen nicht zur Verfügung steht.

Aus der EP-A2 0 139 332 ist ein Gerät zur Reproduktion von Informationen von einer optisch lesbaren Disk bekannt, bei dem ein Positionscode des Lesers gespeichert ist. Tritt nun bei Erschütterungen ein Spurverlust ein, so wird dieser Spurverlust erkannt und der Leser auf die zuletzt gespeicherte Position zurückgesetzt. Dies hat zur Folge, daß die Störung nur durch einen kurzen Signalausfall bemerkbar wird, ansonsten jedoch die Wiedergabe der Aufnahme an der Stelle weitergeführt wird, an der der Spursprung geschehen ist.

Aus der EP-A1 0 143 474 ist ebenfalls ein Gerät zum Lesen von optischen Trägern bekannt, bei dem ein Purfferregister vorgesehen ist, um Zeitbasisfehler in Datensignal zu beheben, die beispielsweise bei Exzentritäten des Aufnahnmeträgers auftreten. Tritt ein solcher Fall auf, werden die Audiodaten mit geringfügigen Zeitbasisfehlern in den Puffer eingelesen, jedoch mit einem Taktsignal ausgelesen, das sehr konstant gehalten ist. Zeitbasisstörungen können so weitgehend vermindert werden.

Der Erfindung liegt die Aufgabe zugrunde, einen CD-Spieler der eingangs genannten Art so zu verbessern, daß Spursprünge auf elektronischem Wege kompensiert werden.

Die Aufgabe ist bei einem CD-Spieler der im Oberbegriff des Anspruchs 1 angegebenen Gattung erfindungsgemäß durch die Merkmale im Kennzeichenteil des Anspruchs 1 gelöst.

Der erfindungsgemäße CD-Spieler vermag erschütterungsbedingte Spursprünge bis zu 40 Spuren auszugleichen. Erschütterungen, die größere Spursprünge auslösen, treten im normalen Fahrzeugbetrieb nicht auf und können ggf. durch kleinvolumige mechanische Dämpfungsmittel und/oder durch Abschalten des Schlittenmotors auf ein solches Maß reduziert werden, daß max. nur 40 Spuren übersprungen werden. Die Zwischenspeicherung der Daten in dem erfindungsgemäßen zusätzli chen Schreib-Lese-Speicher ermöglicht während eines Spursprungs davon unbeeinflußt die kontinuierliche Zuführung der von der CD-Platte abgenommenen und in der Signalverarbeitungseinheit zurückgewonnenen Audioinformationen zu dem NF-Teil des Autoradios und damit das ununterbrochene Hörbarmachen des Audiosignals. Während das Auslesen aus dem Zusatzspeicher mit konstanter Auslesefrequenz fortgesetzt wird, wird die Abtastoptik wieder auf die verlorene Spur zurückgesetzt und der bei Spurverlust gestoppte Einschreibvorgang der abgetasteten Daten in den Zusatzspeicher mittels der Synchronisationsvorrichtung wieder an der richtigen Stelle fortgesetzt.

Vorteilhafte Ausführungsformen der Erfindung mit zweckmäßigen Weiterbildungen ergeben sich aus den weiteren Ansprüchen.

Eine vorteilhafte Ausführungsform der Erfindung ergibt sich dabei aus Anspruch 2. Durch die Anordnung des Zusatzspeichers im Signalpfad zwischen Signalverarbeitungsvorrichtung und D/A-Wandler wird der geringstmögliche Speicherbedarf für den Zusatzspeicher erzielt.

Eine vorteilhafte Ausführungsform der Erfindung ergibt sich auch aus Anspruch 4. Durch die Verwendung der Q-Daten des aus anderen Gründen decodierten Subcodes wird in einfacher Weise eine Möglichkeit der zuverlässigen Berechnung der Größe des Spursprungs gewonnen, so daß das von der Spursprungsteuervorrichtung generierte Rücksetzsignal für die Abtastoptik entsprechend genau bemessen werden kann. Aus der durch die Differenz der Q-Daten bei Spurverlust und bei Spurwiederfinden ableitbaren Zeitdifferenz ist der Spurversatz, definiert in Anzahl der übersprungenen Spuren, problemlos und exakt zu bestimmen.

Eine vorteilhafte Ausführungsform der Erfindung ergibt sich auch aus Anspruch 5. Das von dem Spiegeldetektor ausgegebene sog. Spiegelsignal gibt Auskunft darüber, ob sich der Abtaststrahl der Abtastoptik auf der Informationsspur oder zwischen den Spuren auf dem Metallspiegel befindet. Bei Spurverlust bricht der Pegel des Spiegelsignals zusammen, da der Abtaststrahl ein Minimum der HF-Spannung abtastet. Ein Spurverlust läßt sich somit sicher erkennen. Anstelle des Spiegelsignals kann auch der am Ausgang der Abtastoptik abnehmbare HF-Pegel des Analogsignals zur Spurverlustdetektion herangezogen werden. Bei Spurverlust bricht der HF-Pegel in gleicher Weise vorübergehend zusammen bis die Abtastoptik wieder auf einer neuen Spur positioniert ist. Um die Sicherheit der Spurverlustdetektion zu erhöhen, werden auch die decodierten Q-Daten dem Spurverlustdetektor zugeführt. Bei Spurverlust sind diese Q-Daten nicht mehr verfügbar, was als Detektionsmerkmal ausgewertet wird.

Eine vorteilhafte Ausführungsform der Erfindung ergibt sich aus Anspruch 6. Durch diese Maßnahme wird verhindert, daß die bei CD-Spielern vorgesehene Stummschaltung bei Spurverlust aktiviert wird.

Eine vorteilhafte Ausführungsform der Erfindung ergibt sich aus Anspruch 8. Durch den Adreßsprung beim Auslesevorgang des Zusatzspeichers wird der Zeitverlust zwischen Spurverlust und Zurücksetzen der Abtastoptik wieder ausgeglichen.

Eine vorteilhafte Ausführungsform der Erfindung ergibt sich aus den Ansprüchen 9 und 10. Durch diese Maßnahme wird der Zusatzspeicher nach einem Spursprung schnell wieder mit abgetasteten und aufbereiteten digitalen Daten aufgefüllt, so daß er für einen eventuellen nächsten Spursprung wieder ausreichend mit Auslesedaten gefüllt ist,um während des Spursprungs die Kontinuität des Auslesevorgangs sicherzustellen. Ist eine hinreichend große Datenmenge eingespeichert, wird die Einschreibfrequenz wieder auf den alten Wert reduziert.

Die Erfindung ist anhand eines in der Zeichnung dargestellten Ausführungsbeispiels im folgenden näher beschrieben. Dabei zeigen:
- Fig. 1: ein Blockschaltbild eines CD-Spielers,
- Fig.2: ein Feinblockschaltbild des Blockes "Repositionier- und Synchronisiervorrichtung" in Fig. 1,
- Fig.3: ein Feinblockschaltbild des Blockes "Taktgenerator" in Fig. 1.

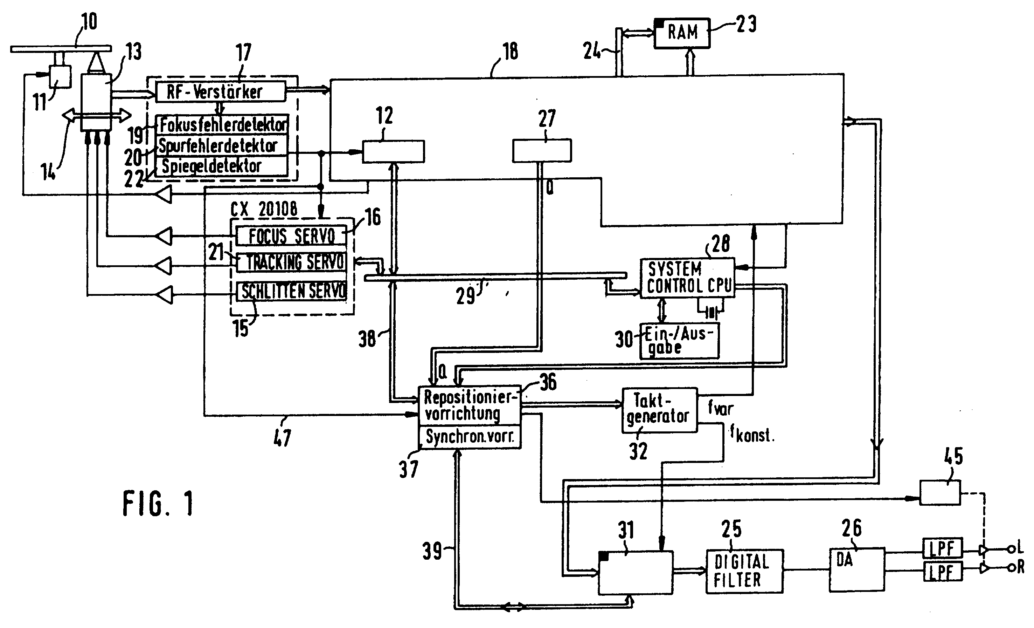

Der in Fig. 1 im Blockschaltbild dargestellte CD-Spieler zum Abspielen von CD-Platten ist in seinem Aufbau bekannt. Die CD-Platte 10 wird von einem Motor 11 angetrieben, der von einem Motor-Regelkreis unter Verwendung eines Disc-Motor-Servos 12 derart geregelt wird, daß die lineare Geschwindigkeit der in den spiralförmig verlaufenden Informationsspuren der CD-Platte 10 in Form von sog. Pits eingeprägten Informationen bezüglich einer feststehenden Abtastoptik 13 konstant ist. Durch den spiralförmigen Verlauf der Informationsspuren ändert sich dabei die Drehzahl des Plattenantriebsmotors 11 von 500 U/min im Platteninnern bis zu 200 U/min. am Plattenrand.

Die im einzelnen nicht dargestellte bekannte Abtastoptik (Optical Pick Up) 13 sitzt auf einem in Radialrichtung zur CD-Platte 10 verfahrbaren Schlitten 14, der in Fig. 1 symbolisch durch einen Doppelpfeil angedeutet ist. Der Schlitten 14 wird mittels eines über einen Schlitten-Servo 15 gesteuerten Nachführmotorsangetrieben und dient der Grobnachführung der Abtastoptik 13 in Radialrichtung der rotierenden CD-Platte 10. Die Abtastoptik 13 weist eine Halbleiter-Laserdiode im Infrarotbereich mit einer Lichtausgangsleistung von 1 mW auf. Der von der Laserdiode ausgegesandte Strahl geht durch ein Strahl-Beugungselement, in welchen sog. Nebenstrahlen erzeugt werden, die zur Spurnachführung (Tracking) benutzt werden. In einem Polarisationsprisma wird das Laserlicht linear polarisiert, um nach Durchtritt durch eine Sammellinse in einer λ/4-Platte bei gleichzeitiger Drehung der Polarisationsebene um 45°. zirkular polarisiert zu werden. An die λ/4-Platte schließt sich ein sog. 2-Achsen-Element an, das in Radialrichtung und in Axialrichtung zur CD-Platte 10 verschiebbar ist. Das 2-Achsen-Element hat einmal die Aufgabe der Fokussierung des Laserstrahls auf die Informationsspuren, wozu es von einem in einem Fokus-Regelkreis angeordneten Fukos-Servo 16 zur Axialverschiebung angesteuert wird. Zum anderen dient das 2-Achsen-Element zur Spurführung des Laserstrahls und wird hierzu von einem in einem Spurregelkreis liegenden Spurführungs- oder Tracking-Servo 21 so angesteuert, daß der Laserstrahl in Radialrichtung der rotierenden CD-Platte 10 verschoben werden kann.

Die von der CD-Platte 10 reflektierten Laserstrahlen durchlaufen auf dem Rückweg abermals das 2-Achsen-Element und treffen dann zum zweiten Mal auf die λ/4-Platte. Das noch zirkular polarisierte Licht wird nun wieder linear polarisiert und die Polarisationsebene erneut um 45°. gedreht. Danach durchläuft das Licht die Sammellinseneinheit und trifft dann linear polarisiert, mit jedoch um 90° gedrehter Polarisationsebene auf das Polarisationsprisma. Das Laserlicht erfährt eine Totalreflektion und wird auf eine Detektorfläche,bestehend aus vier einzelnen Detektorfeldern, abgelenkt. Die Ausgangsspannungen der vier Detektorfelder sind proportional zur Strahllandefläche. Die Addition der vier Spannungen ergibt den von der Platte abgenommenen Signalinhalt, der als analoge Ausgangsspannung (RF) über einen Verstärker 17 einer Signalverarbeitungseinheit 18 zugeführt wird.

In einem Fokusfehlerdetektor 19(Focus Error Detector)werden die Ausgangsspannungen einander diametral gegenüberliegender Detektorfelder addiert und die Summen subtrahiert. Die sich bei falscher Fokussierung des 2-Achsen-Elements ergebende Fehlerspannung wird dem Fokus-Servo 16 zugeführt.

Die Detektorfläche der Abtastoptik 13 weist neben den vier Detektorfeldern für das Hauptlicht noch zwei mit den Nebentrahlen zusammenwirkende Nebenlichtdetektorfelder auf. Diese Nebenlichtdetektorfelder ermitteln die Spurführung der Abtastoptik 13. Bei optimaler Spurführung wird das jeweils vor und hinter dem abgetasteten Bit liegende übernächste Bit am rechten bzw. linken Rand von dem jeweiligen Nebenstrahl erfaßt, so daß die reflektierten Seitenstrahlen an den Nebenlichtdetektorfeldern jeweils die gleiche Ausgangsspannung verursachen. Bei einem Spurfehler dagegen entstehen unterschiedliche Ausgangsspannungen. In einem Spurfehlerdetektor (Tracking Error Detector) 20 wird mittels eines Differenzverstärkers die Ausgangsspannungen der Nebenlichtdetektorfelder ausgewertet und eine Nachregelspannung erzeugt, deren Polarität proportional zur Richtung und zur Größe der Spurabweichung ist. Diese Nachregelspannung wird sowohl dem Tracking-Servo 21 als auch dem Schlitten-Servo 15 zugeführt, die entsprechende Steuerspannungen an den Schlitten-Nachführmotor bzw. an das 2-Achsen-Element geben.

Um zu vermeiden, daß der Tracking-Servo 21 bei Spurverlust den Hauptstrahl auf den zwischen den Informationsspuren liegenden "Spiegel" fixiert, ist ein sog. Spiegeldetektor 22 vorgesehen, der über den RF-Verstärker 17 mit dem Ausgang der Abtastoptik 13 verbunden ist. In dem Spiegeldetektor 22 wird die RF-Spannung am Ausgang der Abtastoptik 13 ausgewertet und ein sog. Spiegelsignal in Form eines Kennimpulses erzeugt, der Auskunft darüber gibt, ob sich der Laser-Hauptstrahl auf der Informationsspur oder zwischen den Spuren auf dem Spiegel befindet. Trifft der Hauptstrahl auf die Informationsspur, so tritt ein Maximum der gleichgerichteten RF-Spannung auf, während bei Abtastung des Spiegels ein Minimum dieser Spannung detektiert wird.

Für die vorstehend beschriebene Abtastoptik 13 kann der von der Fa. Sony angebotene Baustein mit der Typenbezeichnung FOP/LDX - 105 eingesetzt werden. Die Funktionen des RF-Verstärkers 17 des Fokusfehlerdetektors 19, des Spurfehlerdetektors 20 und des Spiegeldetektors 22 können mit dem Baustein CX 20109 der gleichen Firma realisiert werden. Der Fokus-Servo 16, der Tracking-Servo 21 und der Schlitten-Servo 15 sind in einem Baustein CX 20108 der Fa. Sony enthalten.

Die Signalverarbeitungseinheit 18, die zusammen mit dem Disc-Motor-Servo 12 mittels des Bausteins CX 23035 der Fa. Sony realisiert werden kann, arbeitet mit einem externen 16 kBit-RAM 23 über einen Datenbus 24 zusammen. Der Signalbearbeitungseinheit 18 wird das im RF-Verstärker 17 verstärkte analoge Ausgangssignal der Abtastoptik 13 zugeführt. Die Signalverarbeitungseinheit 18 wandelt zunächst eingangsseitig das analoge Signal in digitale Daten, die blockweise unter Zwischenspeicherung im RAM 23 verarbeitet werden, und gewinnt daraus digitale Audiosignale zurück, die nach Filterung in einem digitalen Filter 25 von einem Digital-Analog-Wandler (D/A-Converter) 26 als analoges Audiosignal den Stereokanälen L,R des hier nicht dargestellten NF-Teils eines Autoradios zugeführt werden. Bei der Signalverarbeitung wird u.a. ein zu Steuerzwecken vorgesehener Subcodeblock mittels eines Subcode-Demodulators 27 demoduliert, wodurch ein sog. Subcode-Q-Signal aus 98 Bits verfügbar ist, in welchem neben Steuerbits, Kontrollbits und Synchronisierbits 72 Data-Q-Bits mit 9 Q-Daten TNO, X, MIN, SEC, FRAME, ZERO, AMIN, ASEC, AFRAME enthalten sind. Die Aufgaben dieser Q-Daten sind bereits eingangs erwähnt.

Die gesamte Signalverarbeitungseinheit 18, einschließlich der Servoeinheit,bestehend aus Fokus-Servo 16, Tracking-Servo 21 und Schlitten-Servo 15,werden von einer Systemsteuer-CPU 28 über einen Steuerbus 29 gesteuert. Die CPU 28 kommuniziert mit einer Ein-/Ausgabeeinheit 30, die eine Anzeigeeinheit und eine Bedientastatur aufweist.

Zwischen dem Ausgang der Signalverarbeitungseinheit 18 und dem Eingang des digitalen Filters 25 ist ein Schreib-Lese -Speicher 31, im folgenden kurz Speicher 31 genannt, angeordnet. Der Speicher 31 kann aber auch an einer beliebigen anderen Stelle im Datenverarbeitungspfad der Signalverarbeitungseinheit 18 nach der eingangsseitig durchgeführten A/D-Wandlung angeordnet sein. Der Speicher 31 kann als FIFO oder als RAM oder als eine Kombination aus beiden ausgebildet sein. Der Speicher 31 wird mit einer konstanten Auslesefrequenz betrieben, die von einem Taktgenerator 32 zur Verfügung gestellt wird.

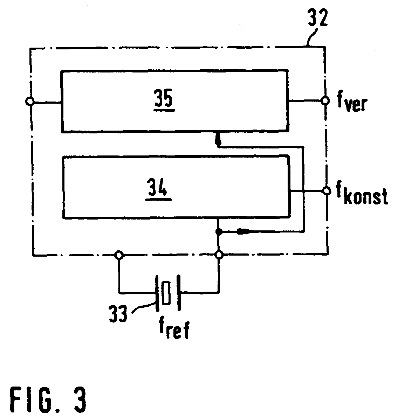

Der Taktgenerator 32 ist in Fig. 3 dargestellt. Er weist einen Quarzoszillator 33 auf, der eine sog. Referenzfrequenz f_{ref} erzeugt. Diese Referenzfrequenz wird in einem ersten Frequenzteiler 34 auf die konstante Auslesefrequenz fₖₒₙₛₜ und in einem zweiten Frequenzteiler 35 mit mindestens in zwei Stufen umschaltbarem Teilerverhältnis auf eine variable Frequenz fᵥₐᵣ heruntergeteilt. Die variable Frequenz fᵥₐᵣ wird der Signalverarbeitungseinheit 18 zugeführt und bildet deren Clockfrequenz.

Zur elektronischen Kompensation von Spursprüngen der Abtastoptik 13, die infolge von mechanischen Erschütterungen auftreten können, ist neben dem Speicher 31 eine Repositioniervorrichtung 36 und eine Synchronisiervorrichtung 37 vorgesehen. Die Repositioniervorrichtung 36 ist übereinen Steuerbus 38 mit der Servoeinheit 15,16,21 verbunden und dient zum Zurücksetzen der Abtastoptik nach Auftreten eines Spursprungs. Die Synchronisiervorrichtung 37 ist über einen Steuerbus 39 mit den Steuer- und Adresseingängen des Speichers 31 verbunden. Die Synchronisiervorrichtung 37 synchronisiert den Beginn des Speicher-Einschreibvorgangs nach der Repositionierung der Abtastoptik 13 durch die Repositioniervorrichtung 36 mit dem Ende des Speicher-Einschreibvorgangs unmittelbar vor dem Spursprung. Die Repositioniervorrichtung 36 und die Synchronisiervorrichtung 37 werden zweckmäßigerweise mittels eines Mikroprozessors realisiert.

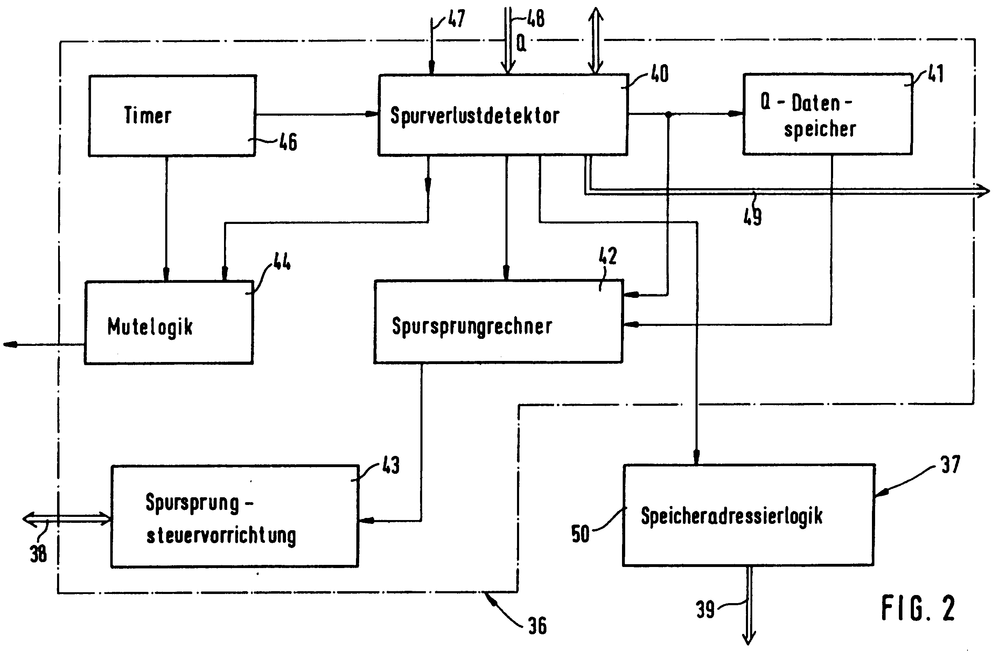

Die im einzelnen in Fig. 2 dargestellte Repositioniervorrichtung 36 weist folgende Funktionsblökke auf: einen Spurverlustdetektor 40, einen mit dem Spurverlustdetektor verbundenen Q-DatenSpeicher 41, einen eingangsseitig sowohl mit dem Ausgang des Spurverlustdetektors 40 als auch mit dem Ausgang des Q-Daten-Speichers 41 verbundenen Spursprungrechner 42, eine eingangsseitig mit dem Ausgang des Spursprungrechners 42 verbundene Spursprungsteuervorrichtung 43, die ausgangsseitig über den Steuerbus 38 mit der Servoeinheit 15,16,21 verbunden ist, eine eingangsseitig mit dem Spurverlustdetektor 40 verbundene Mutelogik 44, die ein Blockiersignal für eine auf die Stereokanäle L,R des NF-Teils des CD-Spielers wirkende Stummschaltung 45 (Fig. 1) generiert, und einen Timer 46 für den Spurverlustdetektor 40 und die Mutelogik 44.

Dem Spurverlustdetektor 40 sind einerseits über eine Signalleitung 47 das vom Spiegeldetektor 22 erzeugte Spiegelsignal und über die Q-Daten-Leitung 48 die Q-Daten vom Subcode-Demodulator 27 zugeführt. Außerdem ist der Spurverlustdetektor 40 über eine Steuerleitung 49 mit dem Steuereingang des zweiten Frequenzteilers 35 mit umschaltbarem Teilerverhältnis des Taktgenerators 32 verbunden. Der Spurverlustdetektor 40 wertet das Spiegelsignal und die Q-Daten aus und detektiert einen Spurverlust der Abtastvorrichtung 13 und ein Wiederfinden einer Spur durch die Abtastvorrichtung 13. In beiden Fällen erzeugt der Spurverlustdetektor 40 ein entsprechendes Steuersignal.

Die dem Spurverlustdetektor 40 zugeführten Q-Daten werden kontinuierlich in dem Q-Daten speicher 41 zwischengespeichert und dem Spursprungrechner 42 zugeführt. In dem Q-Datenspeicher 41 sind gleichzeitig die neun zu einem Datenblock gehörigen Q-Daten abgelegt.

Der Spursprungrechner 42 berechnet die von der Abtastoptik 13 übersprungenen Spuren durch Vergleich der Q-Daten unmittelbar vor Spurverlust mit den Q-Daten unmittelbar nach Wiederfinden der Spur. Da die Q-Daten Angaben über die Spieldauer enthalten, ist diese Differenz eine Zeitdifferenz und ein Maß für die übersprungenen Spuren.

Die Spursprungsteuervorrichtung 43 erzeugt ein Rücksetzsignal, dessen Größe entsprechend der von dem Spursprungrechner 42 berechneten Anzahl von übersprungenen Spuren bemessen ist. Dieses Rücksetzsignal wird über den Steuerbus 38 dem Tracking-Servo 21 zugeführt, der seinerseits das 2-Achsen-Element der Abtastoptik 13 ansteuert und dieses in Radialrichtung zur Rückführung des Laserstrahls auf die ursprüngliche Position vor dem Spursprung in Radialrichtung der rotierenden Platte verschwenkt.

Die Synchronisiervorrichtung 37 ist im wesentlichen eine Speicheradressierlogik 50, die eingangsseitig mit dem Ausgang des Spurverlustdetektors 40 verbunden ist. Mit Anliegen des Spurverlustsignals von dem Spurverlustdetektor 40 wird der Einschreibvorgang von digitalen Daten in den Speicher 31 gesperrt. Die Sperrung wird wieder aufgehoben, sobald das erste Datenwort von demjenigen Datenblock auftritt, der dem vor Spurverlust zuletzt im Speicher 31 vollständig abgespeicherten Datenblock unmittelbar folgt. Die Speicheradressierlogik 50 ist ferner in der Lage, die diesem Datenblock zugeordnete Adresse zu speichern und den Speicher 31 so zu adressieren, daß beim Auslesevorgang ein Adreßsprung auf diese gespeicherte Adresse erfolgt, sobald das letzte Datenwort des vor Spurverlust zuletzt vollständig abgespeicherten Datenblocks am Datenausgang des Speichers erscheint.

Das von dem Spurverlustdetektor 40 bei Wiederfinden der Spur nach Spurverlust ausgegebene Signal liegt als Umschaltsignal an dem zweiten Frequenzteiler 35 mit umschaltbarem Teilerverhältnis. Das Teilerverhältnis des zweiten Frequenzteilers 35 wird dadurch so verändert, daß die Frequenz fᵥₐᵣ erhöht wird. Damit wird die Clock für die Signalverarbeitung 18 erhöht, damit die Abtastfrequenz der CD-Platte 10 und die Plattengeschwindigkeit. Der Einschreibvorgang der am Ausgang der Signalverarbeitungseinheit anstehenden digitalen Audiosignale in den Speicher 31 wird damit erhöht. Mit dieser erhöhten Schreibfrequenz wird der Speicher 31 schnell mit neuen Daten aufgefüllt, so daß bei einem neuen Spurverlust eine ausreichend große Datenmenge im Speicher verfügbar ist, die während des Spurverlustes und der anschließenden Repositionierung der Abtastoptik 13 auf die zuvor verlorene Position kontinuierlich ausgelesen und im Autoradio hörbar gemacht wird.

Die Funktionsweise der Schaltung zur Kompensation eines Spursprungs, bestehend aus Speicher 31, Repositioniervorrichtung 36 und Synchronisiervorrichtung 37 ist wie folgt:
Zu Beginn des Abspielvorgangs der CD-Platte 10 wird der Speicher 31 zunächst mit den von der Signalverarbeitungseinheit 18 ausgegebenen digitalen Daten gefüllt. Die Speicheradressierlogik 50 gibt den Speicherausgang erst nach Auffüllen des Speichers 31 frei, so daß nunmehr die gespeicherten Daten kontinuierlich mit der konstanten Auslesefrequenz fₖₒₙₛₜ an das Digitalfilter 25 übergeben werden, während mit gleicher Einschreibfrequenz neue digitale Daten vom Ausgang der Signalverarbeitungseinheit 18 in den Speicher 31 eingeschrieben werden. Führt infolge eines mechanischen Stoßes oder einer sonstigen Erschütterung die Abtastopik 13 einen Spursprung durch, so führen die Repositioniervorrichtung 36 und Synchronisiervorrichtung 37 zur Datensicherung und zur Kompensation des Spursprungs folgende vier Schritte durch: Erkennen des Spulverlustes, Rücksprung auf die alte Spur, Andreßänderung im Speicher 31 und Wiederauffüllen des Speichers 31.

Der Spuverlustdetektor 40 überwacht die Q-Daten-Leitung 48 und die Signalleitung 47 zum Spiegeldetektor 22. Die an den Spurverlustdetektor 40 gelangenden Q-Daten TNO, X, MIN, SEC, FRAME und/oder AMIN, ASEC und AFRAME werden im Q-Datenspeicher 41 kontinuierlich abgespeichert. Bei Spurverlust bricht der RF-Pegel am Ausgang der Abtastoptik 13 zusammen. Dadurch fällt das Spiegelsignal unter einen Vorgabepegel und auch die Q-Daten sind nicht mehr verfügbar. Der Spuverlusdetektor 40 erkennt damit den Spurverlust und gibt ein Spurverlustsignal an die Mutelogik 44, die ihrerseits ein Blockiersignal an die Stummschaltung 45 legt und somit die im Plattenspieler an sich vorgenommene Stummschaltung des NF-Signals verhindert. Gleichzeitig aktiviert das Spurverlustsignal den Spursprungrechner 42.

Nach dem Spurverlust positioniert der Tracking-Servo 21 den optischen Abtaster 13 auf irgendeine Spur. Über die Q-Daten-Leitung 48 gelangen nunmehr die neuen Daten TNO₁, MIN₁, SEC₁, FRAM₁, und/oder AMIN₁,ASEC₁,AFRAME₁ an den Spurverlustdetektor 40 und werden einerseits in den Q-Datenspeicher 41 eingeschrieben und andererseits unmittelbar dem Spursprungrechner 42 zugeführt. Mit dem Einschreiben der Q-Daten in den Speicher 41 werden die im Q-DatenSpeicher 41 unmittelbar vor Spurverlust zuletzt abgespeicherten Daten an den Spursprungrechner 42 ausgelesen. Aus der Differenz der Q-Daten vor dem Spurverlust und nach Wiederauffinden der Spur berechnet der Spursprungrechner die Anzahl der übersprungenen Spuren. Aufgrund dieser Spurenberechnung generiert die Spursprungsteuervorrichtung 43 ein Rücksetzsignal für den Tracking-Servo 21 in einer solchen Größe, daß die Abtastoptik 13 auf einen Datenblock positioniert wird, der dem vor Spurverlust zuletzt im Speicher 31 vollständig abgespeicherten Datenblock Bᵥ unmittelbar vorausgeht.

Während des gesamten Spurverlustes und Repositioniervorganges werden die Daten mit konstanter Auslesefrequenz kontinuierlich aus dem Speicher 31 ausgelesen. Der Speicher 31 ist so bemessen, daß eine kontinuierliche Datenausgabe vom Spurverlust bis zum erneuten Abtasten des letzten vollständig abgespeicherten Datenblockes Bv vor dem Spurverlust gewährleistet ist. Während dieser Zeit werden keine Daten in den Speicher 31 eingeschrieben.

Der Dateneinschreibvorgang wird fortgesetzt, sobald das erste Datenwort von demjenigen Datenblock B_{v +1} , der dem vor Spurverlust zuletzt im Speicher 31 vollständig abgespeicherten Datenblock Bᵥ unmittelbar folgt, an dem Eingang des Speichers 31 anliegt. Die Speicheradressierlogik 50 speichert die diesem Datenwort des Datenblockes B_{v +1} zugeordnete Adresse A_{v +1}. Sobald das letzte Datenwort des vor Spurverlust zuletzt im Speicher 31 vollständig abgespeicherten Datenblockes Bᵥ aus dem Speicher 31 ausgelesen wird, erzeugt die Speicheradressierlogik 50 einen Adreßsprung auf die Adresse A_{v +1} dieses Datenwortes. Dadurch wird der Auslesevorgang des Speichers 31 bei diesem Datenwort fortgesetzt und somit sichergestellt, daß eine kontinuierliche Datenausgabe an das Digitalfilter 25 stattfindet.

Nach der Ausgabe des ersten Datenwortes des Datenblockes B_{v +1} ist der Speicher 31 nicht mehr hinreichend gefüllt, um weitere Spurverluste auszugleichen. Spätestens mit dem Wiederauffinden einer Spur, also unmittelbar vor dem Repositioniervorgang, gibt der Spurverlustdetektor 40 über die Steuerleitung 49 ein Umschaltsignal an den Taktgenerator 32, das das Teilerverhältnis des zweiten Frequenzteilers 35 mit variablem Teilerverhältnis umschaltet, so daß die vom zweiten Frequenzteiler 35 der Signalverarbeitungseinheit 18 zugeführte Clockfrequenz fᵥₐᵣ erhöht wird. Mit dieser Frequenzerhöhung wird eine Erhöhung der Plattendrehzahl,eine Erhöhung der Abtastgeschwindigkeit der Platte 10 und eine höhere Einschreibgeschwindigkeit für den Speicher 31 bewirkt, so daß der Speicher 31 wieder schnell aufgefüllt wird. Ist eine hinreichend große Datenmenge in dem Speicher 31 gespeichert, so fällt das Umschaltsignal am Eingang des zweiten Frequenzteilers 35 weg,und die Ausgangsfrequenz des zweiten Frequenzteilers 35 wird wieder auf den alten Frequenzwert reduziert.

Der Speicher 31 kann auch in den RAM 23 durch eine entsprechende Erweiterung der Speicherkapazität des RAMs integriert werden. Die beschriebene Anordnung des Speichers 31 unmittelbar vor dem digitalen Filter 25 gewährleistet jedoch den geringstmöglichen Speicherumfang des Speichers 31.

## Patentansprüche

1. Compact-Disc (CD)-Spieler zum Abspielen von sogenannten CD-Platten, bei welchen Informationen in Spuren auf einer Spirale digital abgespeichert sind, insbesondere für Kraftfahrzeuge, mit einem Plattenantriebsmotor und mit einer die Platte optische abtastenden Abtastoptik, die mindestens radial zur rotierenden Platte motorisch verschieblich ist und die Abtastwerte als analoges Ausgangssignal ausgibt, mit einem einen Spurdetektor und einen Spurführungs-Servo aufweisenden Spur-Regelkreis zum spurgetreuen Nachführen der Abtastoptik und mit einer digitalen Signalverarbeitungseinheit, welche das Ausgangssignal der Abtastoptik zu digitalen Daten wandelt, blockweise verarbeitet und daraus digitale Audiosignale zurückgewinnt, die über einen Digital-Analog-Wandler (26) als analoges Audiosignal einer Wiedergabeeinheit, z. B. dem Niederfrequenzteil (NF-Teil) eines Autoradios, zugeführt sind, mit einem der Signalverarbeitungseinheit (18) zugeordneten Schreib-Lese-Speicher (23) zur blockweisen Zwischenspeicherung der mittels eines am Eingang der Signalverarbeitungseinheit (18) angeordneten Analog/Digitalwandlers aus dem abgetasteten Analogdaten zurückgewonnenen digitalen Daten, mit einer Repositioniervorrichtung (35) zum Zurücksetzen der Abtastoptik (13) nach einem Spursprung
gekennzeichnet
durch einen zusätzlichen Schreiblesespeicher (31), der dem Digital-Analog-Wandler (26) vorgeschaltet und zum Zwischenspeichern von digitalen Audio-Datenblöcken vorgesehen ist, und durch eine Synchronisiervorrichtung (37), die den Einschreibvorgang in dem zusätzlichen Schreiblesespeicher (31) bei einem Spurverlust unterbricht und den Einschreibvorgang nach der Repositionierung der Abtastoptik auf die Spur der CD, an der der Speichereinschreibvorgang beim Spurverlust unterbrochen wurde, wieder startet, derart, daß auch Während der Zeit bis zum Wiederfinden der verlorenen Spur eine kontinuierliche Ausgabe digitaler Audio-Signale mit konstanter Auslesefrequenz aus dem zusätzlichen Schreiblesespeicher (31) an den Digital-Analog-Wandler (26) bewirkt wird.

2. CD-Spieler nach Anspruch 1, dadurch gekennzeichnet, daß der zusätzliche Schreib-Lese-Speicher (31) dem Digital-Analog-Wandler (26) unter Zwischenschaltung eines Digitalfilters (25) unmittelbar vorgeordnet ist.

3. CD-Spieler nach Anspruch oder 2, dadurch gekennzeichnet, daß die Repositioniervorrichtung (36) aufweist: einen Spurverlustdetektor (40) zum Erkennen des Verlustes und des Wiederauffindens einer Spur auf der Informationsspirale der CD-Platte (10), einen mit dem Spurverlustdetektor (40) verbundenen Spursprungrechner (42) zum Berechnen der Anzahl der zwischen Spurverlust und Spurauffinden von der Abtastoptik (13) übersprungenen Spuren und eine mit dem Spursprungrechner (42) verbundene Spursprungsteuervorrichtung (43) zum Erzeugen eines Rücksetzsignals für den Spurführungs-Servo (21) aus der Spurversatzberechnung des Spursprungrechners (42).

4. CD-Spieler nach Anspruch 3, bei welchem die Signalverarbeitungseinheiet einen in den Datenblöcken enthaltenen Subcode demoduliert und sogenannte Q-Daten, wie TNO, MIN, SEC, FRAME bzw. AMIN, ASEC, AFRAME ausgibt, dadurch gekennzeichnet, daß dem Spurverlustdetektor (40) die Q-Daten zugeführt sind, daß mit dem Spurverlustdetektor (40) ein Q-Daten-Speicher (41) verbunden ist, in welchem sukzessive die an den Spurverlustdetektor (40) gelangenden Q-Daten abgespeichert werden, daß, der Ausgang des Q-Daten-Speichers (41) mit dem Spursprungrechner (42) verbunden ist und daß der Spursprungrechner (42) derart ausgebildet ist, daß er aus der Differenz der Q-Daten bei Spurverlust einerseits und bei Spurauffinden andererseits die Anzahl der übersprungenen Spuren berechnet.

5. CD-Spieler nach Anspruch 3 oder 4, bei welchem der Spurdetektor eine Spurfehlerdetektor (20) und einen Spiegeldetektor (22) aufweist, der ein vom Pegel der Ausgangssignale der Abtastoptik abhängiges Spiegelsignal generiert, dadurch gekennzeichnet, daß der Spurverlustdetektor (40) eingangsseitig mit dem Spiegelsignal belegt ist und ein für den Spurverlust charakterisches Spurverlustsignal generiert, sobald der Pegel des Spiegelsignals kleiner als ein vorgegebener Minimalpegel ist ind/oder die Q-Daten ausgefallen sind.

6. CD-Spieler nach Anspruch 5, bei welchem eine Stummschaltung zum Unterdrücken des analogen Audiosignals bei Spurverlust vorgesehen ist, dadurch gekennzeichnet, daß das Spurverlustsignal des Spurverlustdetektors (40) als Aktivierungssignal an dem Spursprungrechner (42) und als Blockiersignal an der Stummschaltung (45) liegt.

7. CD-Spieler nach einem der Ansprüche 3 bis 6, dadurch gekennzeichnet, daß die Spursprungsteuervorrichtung (43) ein solches Rücksetzsignal generiert, daß der Abtaststrahl der Abtastoptik auf einen Datenblock positioniert wird, der dem vor Spursprung zuletzt im zusätzlichen Schreib-Lese-Speicher (31) vollständig abgespeicherten Datenblock (Bᵥ) unmittelbar vorausgeht.

8. CD-Spieler nach Anspruch 7, dadurch gekennzeichnet, daß die Synchronisiervorrichtung (37) als eine eingangsseitig mit dem Spurverlustdetektor (40) und ausgangsseitig über einen Steuerbus (39) mit dem zusätzlichen Schreib-Lese-Speicher (31) verbundene Speicheradressierlogik (50) derart ausgebildet ist, daß sie den Dateneinschrieb in den zusätzlichen Schreib-Lese-Speicher (31) bei Anliegen des Spurverlustsignal sperrt und bei Auftreten des ersten Datenwortes von demjenigen Datenblock (Bᵥ₊₁), der dem vor Spurverlust zuletzt im zusätzlichen Schreib-Lese-Speicher (31) vollständig abgespeicherten Datenblock (Bv) unmittelbar folgt, wieder freigibt und die diesem Datenwort zugeordnete Adresse (Aᵥ₊₁) speichert und daß sie beim Auslesevorgang einen Adreßsprung auf die gespeicherte Adresse (Aᵥ₊₁) erzeugt, sobald das letzte Datenwort des vor Spurverlust zuletzt vollständig abgespeicherten Datenblocks (Bᵥ) am Datenausgang des zusätzlichen Schreib-Lese-Speichers (31) erscheint.

9. CD-Spieler nach einem der Ansprüche 1 bis 8, dadurch gekennzeichnet, daß der zusätzliche Schreib-Lese-Speicher (31) nach Repositionieren der Abtastoptik (13) durch Erhöhen der Drehzahl des Plattenantriebsmotors (11) wieder mit Daten aufgefüllt wird.

10. CD-Spieler nach Anspruch 9, dadurch gekennzeichnet, daß die konstante Auslesfrequenz des zusätzlichen Schreib-Lese-Speichers (31) von der Einschreibfrequenz unabhängig ist, daß die Einschreibfrequenz des Schreib-Lese-Speichers (31) in mindestens zwei Frequenzstufen veränderlich ist und daß die Einschreibfrequenz zumindest mit Einschreibbeginn nach Spurverlust bis zur Abspeicherung einer genügend großen Datenmenge im Schreib-Lese-Speicher (31) auf die höhere Frequenzstufe umschaltbar ist.

## Claims

1. Compact disc (CD) player for playing so-called CDs, in which information items are digitally stored in tracks on a spiral, particularly for motor vehicles, comprising a disc drive motor and with scanning optics which optically scan the disc and which can be moved by motor at least radially with respect to the rotating disc and output the scanning values as analog output signal, with a track control loop exhibiting a track detector and a tracking servo for accurately guiding the scanning objects along the correct track, and with a digital signal processing unit which converts the output signal of the scanning optics into digital data, processes them block by block and from these recovers digital audio signals which are supplied via a digital/analog convertor (26) as an analog audio signal to a reproduction unit, for example the audio frequency section (AF section) of a car radio, with a random access memory (23), which is allocated to the signal processing unit (18), for block-by-block temporary storage of the digital data recovered from the scanned analog data by means of an analog/digital convertor arranged at the input of the signal processing unit (18), and with a repositioning device (36) for resetting the scanning optics (13) after a track jump, characterised by an additional random access memory (31) which is arranged preceding the digital/analog convertor (26) and is provided for temporarily storing digital audio data blocks, and by a synchronisation device (37) which interrupts the writing process in the additional random access memory (31) in the event of a track loss and starts the writing process again after the scanning optics have been repositioned on the CD track at which the memory writing process was interrupted when the track loss occurred, in such a manner that, even during the time before the lost track has been found again, digital audio signals are output continuously at a constant read frequency from the additional random access memory (31) to the digital/ analog convertor (25).

2. CD player according to Claim 1, characterised in that the additional random access memory (31) is arranged immediately preceding the digital/analog convertor (26), with interposition of a digital filter (25).

3. CD player according to Claim 1 or 2, characterised in that the repositioning device (36) exhibits a track loss detector (40) for detecting the loss and the recovery of a track on the information spiral of the CD (10), a track jump calculator (42) connected to the track loss detector (40) for calculating the number of tracks skipped by the scanning optics (13) between track loss and track recovery and a track jump control device (43), connected to the track jump calculator (42), for generating a resetting signal for the tracking servo (21) from the track offset calculation of the track jump calculator (42).

4. CD player according to Claim 3, in which the signal processing unit demodulates a subcode contained in the data blocks and outputs so-called Q data such as TNO, MIN, SEC, FRAME or, respectively, AMIN, ASEC, AFRAME, characterised in that the track loss detector (40) is supplied with the Q data, that the track loss detector (40) is connected to the Q data memory (41) in which the Q data reaching the track loss detector (40) are progressively stored, that the output of the Q data memory (41) is connected to the track jump calculator (42) and that the track jump calculator (42) is constructed in such a manner that it calculates the number of skipped tracks from the difference between the Q data on track loss, on the one hand, and on track recovery, on the other hand.

5. CD player according to Claim 3 or 4, in which the track detector exhibits a tracking error detector (20) and a mirror detector (22) which generates a mirror signal depending on the level of the output signals of the scanning optics, characterised in that the track loss detector (40) receives at its input the mirror signal and generates a track loss signal characteristic of the track loss as soon as the level of the mirror signal is lower than a predetermined minimum level and/or the Q data are missing.

6. CD player according to Claim 5, in which a muting circuit for suppressing the analog audio signal on track loss is provided, characterised in that the track loss signal of the track loss detector (40) is present as activation signal at the track jump calculator (42) and as blocking signal at the muting circuit (45).

7. CD player according to one of Claims 3 to 6, characterised in that the track jump control device (43) generates such a resetting signal that the scanning beam of the scanning optics is positioned on a data block which immediately precedes the last data block (Bᵥ) completely stored in the additional random access memory (31) before the track jump.

8. CD player according to Claim 7, characterised in that the synchronisation device (37) is constructed as a memory addressing logic (50) connected at the input to the track loss detector (40) and at the output to the additional random access memory (31) via a control bus (39), in such a manner that it blocks the writing of data into the additional random access memory (31) when the track loss signal is present and enables it again when the first data word of the data block (Bᵥ₊₁) immediately following the last data block (Bᵥ) completely stored in the additional random access memory (31) before track loss occurs, and stores the address (Aᵥ₊₁) allocated to this data word and in that it generates an address jump to the stored address (Aᵥ₊₁) during the read-out process as soon as the last data word of the last data block (Bᵥ) completely stored before track loss appears at the data output of the additional random access memory (31).

9. CD player according to one of Claims 1 to 8, characterised in that the additional random access memory (31) is filled up again with data by an increase in the speed of the disc drive motor (11) after repositioning of the scanning optics (13).

10. CD player according to Claim 9, characterised in that the constant read frequency of the additional random access memory (31) is independent of the write frequency, in that the write frequency of the random access memory (31) is variable in at least two frequency steps, and in that the write frequency can be switched to the higher frequency step at least with the beginning of writing after track loss until a sufficiently large quantity of data has been stored in the random access memory (31).

## Revendications

1. Lecteur de disques compacts CD pour lire des disques compacts ou disques CD, les informations étant enregistrées sous forme numérique sur des pistes en spirale, lecteur notamment destiné à des véhicules automobiles, comprenant un moteur entraînant le disque et une optique de détection qui détecte le disque de façon optique et qui peut être coulissée par moteur, au moins dans la direction radiale par rapport au disque en rotation et fournit des valeurs de détection comme signal de sortie analogique, avec un circuit de régulation de pistes comportant un détecteur de pistes et un dispositif d'asservissement de piste pour asservir l'optique de détection de manière fidèle sur la piste et une unité de traitement numérique de signal qui transforme le signal de sortie de l'optique de détection en des données numériques, les traite par bloc, en récupère les signaux audio numériques qui sont appliqués par l'intermédiaire d'un convertisseur numérique/analogique (26) comme signal audio analogique à une unité de reproduction par exemple la partie basse fréquence (partie BF) d'un autoradio, avec une mémoire inscription/lecture (23) associée à une unité de traitement de signaux (18) pour la mémorisation intermédiaire par blocs des données numériques récupérées au moyen d'un convertisseur analogique/numérique disposé à l'entrée de l'unité de traitement de signal (18) à partir des données analogiques détectées, avec un dispositif de repositionnement (36) pour remettre en place l'optique de détection (13) après un saut de pistes,
caractérisé par
une mémoire additionnelle inscription/lecture (31) qui est branchée avant le commutateur numérique/analogique (25) et est prévue pour enregistrer de façon intermédiaire les blocs de données audio numériques et par un dispositif de synchronisation (37) qui interrompt l'opération d'inscription dans la mémoire additionnelle inscription/lecture (31) lors d'une perte de piste et de nouveau met en marche l'opération d'inscription après le repositionnement de l'optique de détection sur la piste du CD, sur laquelle l'opération d'inscription en mémoire a été interrompue lors de la perte de piste, de manière que, même pendant le temps nécessaire pour retrouver la piste perdue, une émission continue de signaux audio numériques est réalisée avec une fréquence de lecture constante à partir de la mémoire additionnelle inscription/lecture (31) sur le convertisseur numérique/analogique (26).

2. Lecteur de disques CD selon la revendication 1,
caractérisé en ce que
la mémoire additionnelle inscription/lecture (31) précède directement le convertisseur numérique/analogique (26) avec interposition d'un filtre numérique (25).

3. Lecteur de disques CD selon la revendication 1 ou 2,
caractérisé en ce que
le dispositif de reproduction (36) comprend : un détecteur de perte de piste (40) pour déceler la perte d'une piste et la récupération d'une piste sur la spirale contenant les informations sur le disque CD (10), un calculateur de saut de pistes (42) relié au détecteur de perte de piste (40) pour calculer le nombre de pistes sautées par l'optique de détection (13) entre la perte de piste et la récupération de la piste, ainsi qu'un dispositif de commande de saut de pistes (43) relié au calculateur de saut de pistes (42) pour générer un signal de remise à l'état initial pour le dispositif d'asservissement de piste (21) à partir du calcul du décalage de piste par le calculateur de saut de pistes (42).

4. Lecteur de disques CD selon la revendication 3 pour lequel l'unité de traitement de signal démodule un sous-code contenu dans les blocs de données et des données dites Q telles que TNO, MIN, SEC, FRAME ou AMIN, ASEC, AFRAME,
caractérisé en ce que
le détecteur de perte de piste (40) reçoit des données Q, une mémoire de données Q (41) étant reliée au détecteur de perte de piste (40) dans lequel sont enregistrées les données Q qui arrivent successivement sur le détecteur de perte de piste (40), et la sortie de la mémoire de données Q (41) est reliée au calculateur de saut de pistes (42) et ce calculateur de saut de pistes (42) est conçu pour qu'à partir de la différence des données Q en cas de perte de piste d'une part et de récupération de pistes d'autre part, il calcule le nombre de pistes sautées.

5. Lecteur de disques CD selon les revendications 3 ou 4 dans lequel
le détecteur de pistes comprend un détecteur d'erreur de pistes (20) et un détecteur de miroir (22), qui génère un signal de miroir dépendant du niveau des signaux de sortie de l'optique de détection,
caractérisé en ce que
l'entrée du détecteur de perte de piste (40) reçoit le signal de miroir et génère un signal de perte de piste caractéristique de la perte de piste, dès que le niveau du signal de miroir est inférieur à un niveau minimum prédéterminé et/ou que les données Q ont disparu.

6. Lecteur de disques CD selon la revendication 5 comportant un circuit de silence pour supprimer le signal audio analogique en cas de perte de piste,
caractérisé en ce que
le signal de perte de piste fourni par le détecteur de perte de piste (40) est un signal d'activation appliqué au calculateur de saut de pistes (42) et comme signal de blocage pour le circuit de silence (45).

7. Lecteur de disques CD selon l'une des revendications 3 à 6,
caractérisé en ce que
le dispositif de commande de saut de pistes (43) génère un signal de retour tel que le faisceau de détection de l'optique de détection soit positionné sur le bloc de données qui précède directement le dernier bloc de données B_{V} inscrit complètement dans la mémoire additionnelle de lecture/écriture (31) avant le saut de pistes.

8. Lecteur de disques CD selon la revendication 7,
caractérisé en ce que
le dispositif de synchronisation (37) est réalisé en forme de logique d'adresse de mémoire (50) dont l'entrée est reliée au détecteur de perte de piste (40) et dont la sortie est reliée par un bus de commande (39) à la mémoire additionnelle inscription/lecture (31), de telle sorte qu'il bloque l'inscription des données dans la mémoire additionnelle inscription/lecture (31) lorsque est appliqué le signal de perte de piste et qu'à l'arrivée du premier mot de données du bloc de données B_{V+1}, qui suit directement le bloc de données B_{V} enregistré complètement en dernière position avant la perte de piste dans la mémoire additionnelle inscription/lecture (31), qu'il la libère à nouveau et enregistre l'adresse A_{V+1} associée à ce mot de données et que, lors de l'opération de lecture, il génère un saut d'adresse sur l'adresse enregistrée A_{V+1}, dès que le dernier mot de données du bloc de données B_{V} inscrit complètement en dernier lieu avant le saut de pistes apparaît à la sortie de données de la mémoire additionnelle d'inscription/lecture (31).

9. Lecteur de disques CD selon l'une des revendications 1 à 8,
caractérisé en ce que
la mémoire additionnelle inscription/lecture (31) est de nouveau remplie de données après le repositionnement de l'optique de détection (13) par l'augmentation de la vitesse de rotation du moteur d'entraînement (11) du disque.

10. Lecteur de disques CD selon la revendication 9,
caractérisé en ce que
la fréquence de lecture de la mémoire additionnelle inscription/lecture (31) est constante et est indépendante de la fréquence d'inscription, la fréquence d'inscription de la mémoire d'inscription/lecture (31) est variable suivant au moins deux niveaux de fréquence et la fréquence d'inscription est commutée au moins avec le début de l'inscription après la perte de piste jusqu'à la mise en mémoire d'une quantité suffisamment importante de données dans la mémoire inscription/lecture (31), sur le niveau de fréquence plus élevé.
